# EUROPÄISCHE PATENTSCHRIFT

(11) **EP 3 720 790 B1**
(45) Veröffentlichungstag und Bekanntmachung des Hinweises auf die Patenterteilung: **12.03.2025**
(21) Anmeldenummer: 18810987.0
(22) Anmeldetag: 26.11.2018
(51) Int. Cl.: B65G 15/62, B65G 21/06

(54) **TRANSPORTVORRICHTUNG**
TRANSPORT DEVICE
APPAREIL DE TRANSPORT

(30) Priorität: 08.12.2017 DE 102017129292
(43) Veröffentlichungstag der Anmeldung: 14.10.2020
(73) Patentinhaber: KHS GmbH, 44143 Dortmund (DE)
(72) Erfinder: GRÄVINGHOLT, Stefan, 58454 Witten (DE); GREIVING, Thomas, 59348 Lüdinghausen (DE); PAROTH, Berthold, 44289 Dortmund (DE); SARAJLIJA, Zlatko, 44369 Dortmund (DE); STIENEN, Thomas, 59425 Unna (DE)
(86) Internationale Anmeldenummer: PCT/EP2018/082533
(87) Internationale Veröffentlichungsnummer: WO 2019/110351

(56) Entgegenhaltungen:
- EP-A1- 2 835 328
- EP-A1- 3 020 659
- WO-A1-01/32534
- FR-A- 1 310 053
- US-A- 3 595 380
- US-B2- 6 640 966

## Beschreibung

Die Erfindung bezieht sich auf eine Transportvorrichtung zum Transportieren von Transportgut in einer Transportrichtung.

Gattungsgemäße Transportvorrichtungen werden in der Getränkeindustrie zum Transportieren von Stückgütern verwendet und weisen in der Regel eine Vielzahl von jeweils eine geschlossene Schlaufe bildende und umlaufend angetriebene Transportelemente, insbesondere auch in Form von Transportketten oder Scharnierbandketten, auf. Derartige Transportvorrichtungen sind dem einschlägigen Fachmann hinlänglich bekannt. Die Transportelemente bilden jeweils mit ihrer oberen, sich gegen wenigstens eine Gleichführung abstützenden Länge die gemeinsame horizontale oder im Wesentlichen horizontale Transportebene oder -fläche, auf die das Transportgut mit seinem Transportgutboden oder seinem Standboden aufsteht.

Bei derartigen Transportvorrichtungen handelt es sich dabei insbesondere um Transporteure der Getränkeindustrie, die beispielsweise eine Leistung von mehr als 10000, bevorzugt von mehr als 50000 beförderten Stückgütern, beispielsweise Behältern, pro Stunde aufweisen.

Mithin umfassen derartige Transportvorrichtungen üblicherweise ein Gerüst bzw. einen Maschinenrahmen, an dem die Transportelemente aufgenommen, gehalten und/oder geführt sind. Einzelne Gerüste sind dabei in der Regel an bestimmte Rastermaße hinsichtlich ihrer jeweiligen Länge und/oder Breite angepasst, so dass einzelne Gerüste kombiniert werden können und die einzelnen Maschinen einer Gesamtproduktionsanlage innerhalb der Getränkeindustrie miteinander verbindbar sind. Hierfür weisen die Gerüste einen Tragkörper auf, an dem Profilelemente, beispielsweise M-Profile, U-Profile, Flachprofile, Rohrprofile insbesondere jedoch C-Profil-Elemente, angeordnet sind. An der Oberseite dieser Profilelemente verlaufen die Transportelemente, vorzugsweise die Transportketten, wobei diese durch Antriebsmotoren endlos umlaufend bewegt werden und dabei auf den Profilelementen gleitend geführt sind.

Ebenfalls ist es bekannt, zur Herabsetzung des Reibungskoeffizienten zwischen den Profilelementen und den Transportelementen Gleitelemente, insbesondere Gleitleisten, vorzusehen, die einen geringen Reibungskoeffizienten aufweisenden Belag für die Transportelemente ausbilden, um dadurch den Verschleiß an und die erforderlichen Antriebskräfte für die Transportelemente zu reduzieren.

Dabei werden die Transportelemente durch die umlaufenden Kettenräder in einer Transportrichtung bewegt. Auf den Transportelementen stehen die Stückgüter, insbesondere die Behälter auf. Durch die Stückgüter und auch das Eigengewicht der Transportelemente wird eine große, in Transportrichtung wirkende Zugkraft auf die Gleitelemente ausgeübt. Um den während des umlaufenden Betriebs der Transportelemente permanent erfolgenden Wechsel der einzelnen Kettenglieder zwischen dem Hintrum und/oder dem Rücktrum so materialschonend als möglich zu gestalten, sind an den Übergabebereichen zwischen Hintrum und/oder Rücktrum Einlauffinger vorgesehen. Dabei werden im Stand der Technik die einzelnen Einlauffinger und Gleitelemente mittels Schraubverbindungen aufwändig miteinander verbunden, insbesondere verschraubt oder vermietet, was sehr zeitaufwändig und somit teuer ist.

Aus der Druckschrift EP 3 020 659 A1 ist dabei ein Riemenmodul zur Verwendung in einer Förderanlage bekannt geworden, wobei das Riemenmodul einen sich in eine Längsrichtung erstreckenden Träger aufweist, an dessen beiden gegenüberliegenden Längsstirnseiten jeweils eine Umlenkbaugruppe mit einem Umlenkrad angeordnet ist. Dabei ist ein endloser Förderriemen vorgesehen, welcher die beiden Umlenkräder umschlingt, wodurch ein vorlaufender und ein rücklaufender Riemenabschnitt definiert werden, wobei der vorlaufende Riemenabschnitt außen an dem Träger abgestützt ist, wobei wenigstens eine Umlenkbaugruppe einen Grundkörper mit einem Lagerhalter aufweist, wobei das Umlenkrad den Lagerhalter umgibt, wobei es an diesem bezüglich einer Drehachse drehbar abgestützt ist. Die Druckschrift zeichnet sich insbesondere dadurch aus, dass der Grundkörper wenigstens einen sich in Längsrichtung erstreckenden Zapfen aufweist, der in den Träger eingreift, wobei der wenigstens eine Zapfen und der Lagerhalter einstückig mit einer Seitenplatte des Grundkörpers ausgebildet sind. Die Druckschrift EP3 020 659 A1 offenbart eine Transportvorrichtung gemäß dem Oberbegriff des Anspruchs 1.

Ausgehend hiervon liegt der vorliegenden Erfindung die Aufgabe zu Grunde, eine Transportvorrichtung zum Transportieren von Transportgut in einer Transportrichtung bereitzustellen, die die vorgenannten Nachteile vermeidet und hierbei insbesondere eine einfache und gleichzeitig zuverlässig und schnelle Verbindung der Gleitleisten und/oder Profilelemente der Transportvorrichtung ermöglicht. Diese Aufgabe wird mit den Merkmalen des Patentanspruches 1 gelöst. Die Unteransprüche betreffen dabei besonders bevorzugte Ausführungsvarianten der Erfindung.

Der wesentliche Aspekt der vorliegenden Erfindung besteht dabei darin, eine Transportvorrichtung zum Transportieren von Transportgut in einer Transportrichtung vorzuschlagen, umfassend wenigstens einen Maschinenrahmen, an dem wenigstens ein, eine Schlaufe bildendes und umlaufend angetriebenes Transportelement angeordnet ist, wobei das Transportelement über eine bezogen auf die Transportrichtung vordere Umlenkeinrichtung sowie über eine bezogen auf die Transportrichtung rückwärtige Umlenkeinrichtung geführt ist, wobei zwischen der vorderen und der rückwärtigen Umlenkeinrichtung mittels des wenigstens einen Transportelementes eine Transportstrecke für das Transportgut ausbildet ist, wobei das wenigstens eine Transportelement zumindest entlang der Transportstrecke auf wenigstens einer Gleitleiste gleitend aufliegend geführt ist, wobei die wenigstens eine Gleitleiste zumindest abschnittsweise entlang der Transportstrecke an zumindest einem Profilelement angeordnet ist, das mit wenigstens einem Tragkörper des Maschinenrahmens verbunden ist, wobei das wenigstens eine Transportelement zumindest im Übergangsbereich von der vorderen Umlenkeinrichtung auf die zumindest eine Gleitleiste zumindest abschnittsweise über wenigstens einen Einlauffinger geführt ist, der mit der Gleitleiste und/oder mit dem Profilelement lösbar verbunden ist, wobei die lösbare Verbindung des wenigstens einen Einlauffingers mit der zumindest einen Gleitleiste als Rastverbindung ausgebildet ist und/oder die lösbare Verbindung des wenigstens einen Einlauffingers mit dem zumindest einen Profilelement als Steckverbindung ausgebildet ist und/oder der wenigstens eine Einlauffinger und das zumindest eine Profilelement über eine Schnellbefestigungseinrichtung mit dem zumindest einen Tragkörper lösbar verbunden sind.

Gemäß einer vorteilhaften Ausführungsvariante kann vorgesehen sein, dass der Einlauffinger zumindest einen Führungsabschnitt aufweist, der an seiner Oberseite eine Auflagenfläche zum gleitend aufliegenden Überführen des Transportelementes von der vorderen Umlenkeinrichtung auf die wenigstens eine Gleitleiste ausbildet.

Gemäß einer weiteren vorteilhaften Ausführungsvariante kann vorgesehen sein, dass der Führungsabschnitt an seinem dem vorderen Ende zugewandten freien Stirnseite abgerundet und/oder abgeschrägt ausgebildet ist.

Gemäß einer nochmals weiter vorteilhaften Ausführungsvariante kann vorgesehen sein, dass der Einlauffinger einen sich an den Führungsabschnitt unmittelbar benachbart anschließenden Auflageabschnitt aufweist, wobei der Auflageabschnitt zur Ausbildung der Rastverbindung zwischen dem Einlauffinger und der Gleitleiste zumindest ein Rastelement aufweist, derart, dass der Auflageabschnitt damit zur verrastbaren Auflage einer Gleitleiste ausgebildet ist.

Gemäß einer nochmals weiter vorteilhaften Ausführungsvariante kann vorgesehen sein, dass das Rastelement in eine in der Gleitleiste vorgesehene Rastöffnung derart eingreifbar ausgebildet ist, dass das Rastelement in die Rastöffnung einführbar ist und in einer Rastposition verrastet.

Erfindungsgemäß ist dabei vorgesehen, dass der Einlauffinger einen sich wiederum an den Auflageabschnitt benachbart anschließenden Aufnahmeabschnitt aufweist, der die Steckverbindung zur lösbar steckenden Aufnahme eines Profilelementes ausbildet.

Gemäß einer nochmals weiter vorteilhaften Ausführungsvariante kann vorgesehen sein, dass die Steckverbindung ausgebildet ist, indem die Außengeometrie des Aufnahmeabschnittes an die Innengeometrie des Profilelementes derart angepasst ist, dass der Aufnahmeabschnitt formschlüssig von dem aufgesteckten Profilelement aufnehmbar ist.

Gemäß einer nochmals weiter vorteilhaften Ausführungsvariante kann vorgesehen sein, dass der Aufnahmeabschnitt, der Auflageabschnitt sowie der Führungsabschnitt jeweils derart treppenförmig gegenseitig versetzt vorgesehen sind, dass im jeweiligen Übergangsbereich eine Anschlagsfläche ausbildet ist.

Erfindungsgemäß ist dabei vorgesehen, dass der Einlauffinger einen sich wiederum an den Aufnahmeabschnitt benachbart anschließenden Steckabschnitt aufweist, über den der Einlauffinger mit der Schnellbefestigungseinrichtung lösbar verbindbar ist, wobei die lösbare Verbindung der Schnellbefestigungseinrichtung mit dem Einlauffinger kraft- und/oder formschlüssig ausgebildet ist.

Gemäß einer nochmals weiter vorteilhaften Ausführungsvariante kann vorgesehen sein, dass die wenigstens eine Schnellbefestigungseinrichtung zur lösbaren Verbindung des Profilelementes mit dem Grundträger zwischen einer Verriegelungsposition und einer Freigabeposition verstellbar ausgebildet ist, und zwar derart, dass die Schnellbefestigungseinrichtung in der Verriegelungsposition das Profilelement fest jedoch lösbar mit dem Grundträger verbindet und in der Freigabeposition wieder freigibt.

Gemäß einer vorteilhaften Ausführungsvariante kann vorgesehen sein dass die Schnellbefestigungseinrichtung zwischen einer Verriegelungsposition und einer Freigabeposition verstellbar ausgebildet, und zwar derart, dass die Schnellbefestigungseinrichtung in der Verriegelungsposition das Profilelement fest jedoch lösbar mit dem Grundträger verbindet und in der Freigabeposition wieder freigibt, also löst.

Gemäß einer weiteren vorteilhaften Ausführungsvariante kann vorgesehen sein, dass die Schnellbefestigungseinrichtung jeweils einen sich entlang einer Mittellängsachse der Schnellbefestigungseinrichtung erstreckenden und einander gegenüberliegenden Befestigungsabschnitt aufweist, mit dem das Profilelement und/oder der Grundträger verbindbar sind.

Gemäß einer nochmals weiteren vorteilhaften Ausführungsvariante kann vorgesehen sein, dass der erste und/oder zweite Befestigungsabschnitt zur kraftschlüssigen und/oder formschlüssigen Verbindung in der Verriegelungsposition der Schnellbefestigungseinrichtung ausgebildet ist.

Gemäß einer nochmals weiteren vorteilhaften Ausführungsvariante kann vorgesehen sein, dass der erste und/oder zweite Befestigungsabschnitt in der Verriegelungsposition in das Profilelement und/oder den Grundträger eingesteckt ist und zwar insbesondere in eine Vorlochung des Grundträgers und/oder eine Ausnehmung des Profilelementes.

Gemäß einer nochmals weiteren vorteilhaften Ausführungsvariante kann vorgesehen sein, dass der der erste und/oder zweite Befestigungsabschnitt in der Verriegelungsposition in das Profilelement und/oder den Grundträger eingeschnappt ist.

Gemäß einer nochmals weiteren vorteilhaften Ausführungsvariante kann vorgesehen sein, dass der der erste und/oder zweite Befestigungsabschnitt in der Verriegelungsposition mit dem Profilelement und/oder den Grundträger fest verbunden ist, indem der erste und/oder zweite Befestigungsabschnitt mit einem Verriegelungselement die Vorlochung des Grundträgers und/oder die Ausnehmung des Profilelementes hintergreift.

Gemäß einer nochmals weiteren vorteilhaften Ausführungsvariante kann vorgesehen sein, dass die Schnellbefestigungseinrichtung um eine Mittellängsachse zwischen einer Verriegelungsposition und einer Freigabeposition drehbar ausgebildet.

Gemäß einer nochmals weiteren vorteilhaften Ausführungsvariante kann vorgesehen sein, dass die Schnellbefestigungseinrichtung als Drehverriegelungseinrichtung ausgebildet ist, die in der Verriegelungsposition eine kraftschlüssige und/oder formschlüssige Verbindung herstellt.

Gemäß einer nochmals weiteren vorteilhaften Ausführungsvariante kann vorgesehen sein, dass die Schnellbefestigungseinrichtung in dem ersten Befestigungsabschnitt einen freiendseitigen ersten Verriegelungsabschnitt und in dem zweiten Befestigungsabschnitt einen freiendseitigen zweiten Verriegelungsabschnitt aufweist, dass der Grundträger zur lösbar klemmenden Befestigung zumindest in einem zumindest abschnittsweise flachen Abschnitt eine von der Kreisform abweichende Vorlochung oder Öffnung aufweist, dessen Querschnitt an den Längsschnitt des ersten Verriegelungsabschnitts angepasst ist, und zwar derart, dass der erste Verriegelungsabschnitt durch die Vorlochung hindurchführbar ist und die Schnellbefestigungseinrichtung durch Verdrehung um die Mittellängsachse mit dem ersten Befestigungsabschnitt an dem Profilelement klemmend befestigbar ist, und dass das Profilelement zumindest einen eine Ausnehmung ausbildenden Profilierungsabschnitt aufweist, dessen Querschnitt an den Querschnitt des zweiten Verriegelungsabschnitt angepasst ist, und zwar derart, dass zur lösbar klemmenden Befestigung des ersten Befestigungsabschnittes an dem Profilelement durch Verdrehung des zweiten Verriegelungsabschnittes um die Mittelängsachse der zweite Verriegelungsabschnitt zumindest abschnittsweise formschlüssig in der Ausnehmung aufnehmbar ist.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: eine schematische Seitenansicht einer beispielhaften Transportvorrichtung zum Transportieren von Stückgütern
- Fig. 2: einen vergrößerten Ausschnitt der Transportvorrichtung gemäß des strichlinierten Kreises der Figur 1,

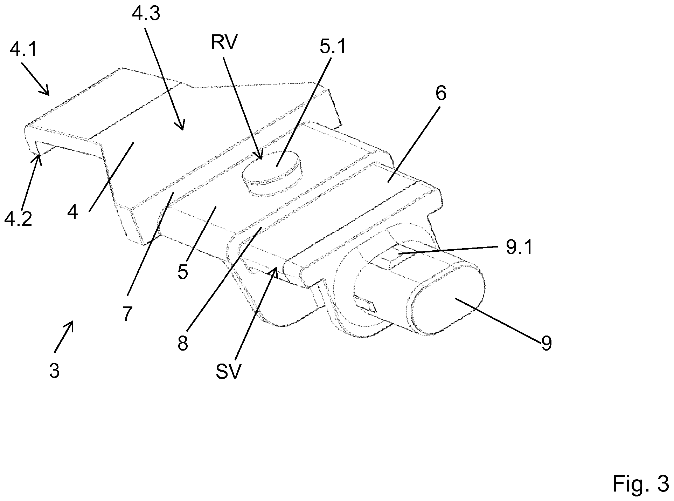

- Fig. 3: einen freigestellten Einlauffinger in einer perspektivischen Ansicht,
- Fig. 4: eine schematische Schnittdarstellung entlang der Schnittlinie A aus Figur 1
- Fig. 5: eine schematische Seitenansicht einer beispielhaften Ausführungsvariante einer erfindungsgemäßen Schnellbefestigungseinrichtung in einer Verriegelungsposition,
- Fig. 6a: eine schematische Explosionsansicht der Ausführungsvariante der erfindungsgemäßen Schnellbefestigungseinrichtung gemäß Figur 3 in einer Freigabeposition,
- Fig. 6b: eine schematische Draufsicht auf die Vorlochung oder Öffnung eines ansonsten nur abschnittsweise dargestellten Grundträgers,
- Fig. 7a und 7b: in perspektivischer bzw. seitlicher schematischer Schnittdarstellung eine Ausführungsvariante einer alleingestellten Schnellbefestigungseinrichtung.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

Die in den Figuren allgemein mit 100 bezeichnete, beispielhafte Transportvorrichtung dient insbesondere zum Transportieren von Transportgut 102 in wenigstens einer Transportrichtung A zwischen jeweils nicht nähergehend dargestellten Behälterbehandlungsmaschinen und/oder Überschubstationen und/oder Transferstationen und/oder Überleitstationen für die Verpackungs- und/oder Getränkeindustrie. Besonders vorteilhaft weist die Transportvorrichtung 100 dabei eine Leistung von mehr als 10000, bevorzugt von mehr als 50000 beförderten Stückgütern 102, beispielsweise Behältern, pro Stunde auf.

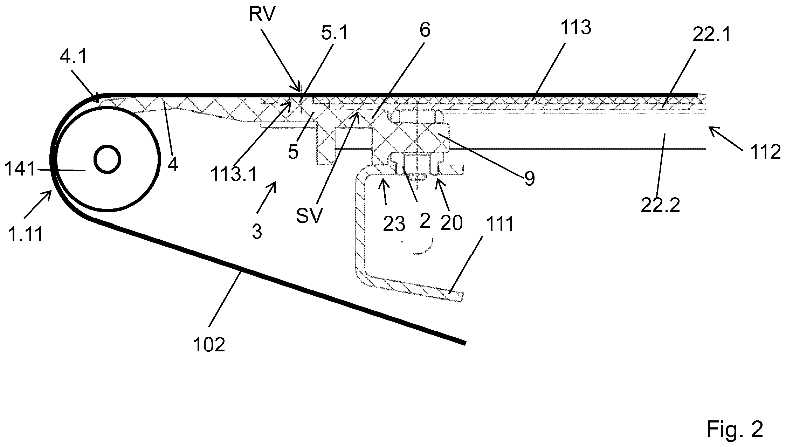

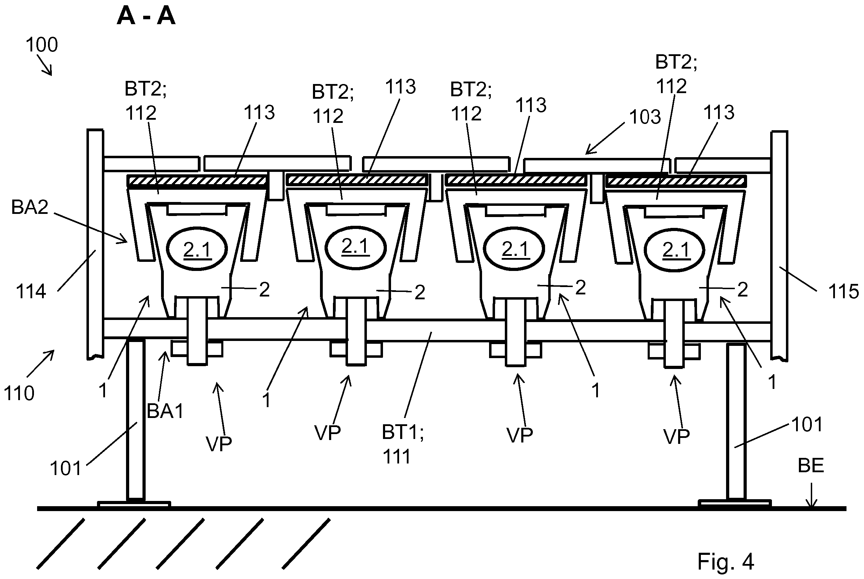

Insbesondere umfasst die Transportvorrichtung 100 hierfür wenigstens ein, eine geschlossene Schlaufe ausbildendes und in Transportrichtung A endlos umlaufend angetriebenes Transportelement 103, das beispielsweise als Transportriemen, Transportkette, Scharnierbandkette oder Transportmatte ausgebildet sein kann. Das Transportelement 103 bildet mit seiner oberen, sich gegen wenigstens eine Gleitleiste 113 -dargestellt in den Figuren 2 oder 4 - abstützende Länge eine horizontale oder im Wesentlichen horizontale Transportebene oder -fläche TE aus, auf der das Transportgut 102 mit seinem Transportgutboden oder seinem Standboden aufsteht. Wie insbesondere aus den Figuren 2 und 4 ersichtlich, ist das wenigstens eine Transportelement 103 zumindest entlang der Transportstrecke TS auf der wenigstens einen Gleitleiste 113 gleitend aufliegend geführt. Dabei können auch mehrere, beispielsweise zwei, drei, vier oder mehr Transportelemente 103 vorgesehen sein, die mehrzügig, d.h. quer oder senkrecht zur Transportrichtung A einander benachbart angeordnet sind, sodass die mehreren Transportelemente 103 zumindest mit einem Teil ihrer jeweils oberen Länge ihrer entsprechenden Schlaufe die gemeinsame Transportebene TE ausbilden, auf der das Transportgut 102 mit seiner Bodenfläche zumindest teilweise aufstehen kann.

An dem bezogen auf die Transportrichtung A vorderen Ende 1.11 sowie bezogen auf die Transportrichtung A rückwärtigen Ende 1.12 ist das wenigstens eine Transportelement 103 jeweils über Umlenkeinrichtungen 141, 142 geführt, wobei das wenigstens eine Transportelement 103 insbesondere an seinem vorderen Ende 1.11 über eine vordere Umlenkeinrichtung 141 und an seinem rückwärtigen Ende 1.12 über eine rückwärtige Umlenkeinrichtung 142 geführt ist. Zwischen der vorderen und der rückwärtigen Umlenkeinrichtung 141, 142 ist mittels des wenigstens einen Transportelementes 103 eine Transportstrecke TS für das Transportgut 102 ausbildet. Die Transportstrecke TS, auf der das Transportgut 102 befördert werden kann, ist also insbesondere von der rückwärtigen Umlenkeinrichtung 142 in Transportrichtung A bis zur vorderen Umlenkeinrichtung 141 ausgebildet.

Dabei kann auch vorgesehen sein, dass die vordere und/oder die hintere Umlenkeinrichtung 141, 142 motorisch antreibbar ausgebildet ist. Beispielsweise kann die vordere und/oder hintere Umlenkeinrichtung 141, 142 als Elektromotor, vorzugsweise als getriebeloser Elektromotor, beispielsweise in Form eines direkt angetriebenen Elektromotors, bevorzugt in Form eines Schrittmotors, eines Servomotors oder eines Torquemotors, ausgebildet sein.

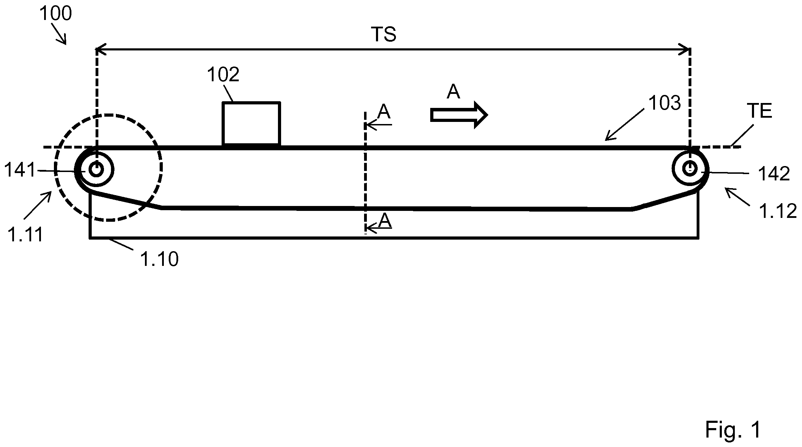

Zudem weist die Transportvorrichtung 100, wie in der Figur 1 nur schematisch angedeutet, einen Maschinenrahmen 110 auf, der ein Gerüst ausbildet und an dem sämtliche Komponenten der Transportvorrichtung 100 angeordnet bzw. aufgenommen sind und mittels dem die Transportvorrichtung 100 über Stützelemente 101 bzw. Beine auf einer Bodeneben BE aufsteht.

Dabei ist die wenigstens eine Gleitleiste 113 zumindest abschnittsweise entlang der Transportstrecke TS an zumindest einem Profilelement 112 angeordnet ist, das mit wenigstens einem Tragkörper 111 des Maschinenrahmens 110 verbunden.

Wie hierbei insbesondere aus der Figur 4 mehr im Detail ersichtlich, weist der Maschinenrahmen 110 wenigstens einen sich über die gesamte Transportelementbreite, also quer zur Transportrichtung A, erstreckenden Tragkörper 111 auf der einen Grundträger zur Aufnahme weiterer Bauteile und Komponenten der Transportvorrichtung 100 ausbildet und an dem zwei Stützelemente 101 fest angeordnet sind. Der Tragkörper 111 bildet dabei ein Trägerelement, beispielsweise einen aus Edelstahl herstellten U-Profilträger aus.

Vorzugsweise umfasst der Maschinenrahmen 110 zwei oder auch mehrere Tragkörper 111, die über die gesamte Länge der Transportstrecke TS beispielweise in gleichmäßigen Abständen verteilt vorgesehen sind, und sich über jeweils zumindest zwei Stützelemente 101 auf der Bodeneben BE abstützen. Dabei ist vorteilhaft zumindest ein Tragkörper 111 im Bereich des vorderen Endes 1.11 und zumindest ein weiterer Tragkörper 111 im Bereich des hinteren Endes 1.12 der Transportvorrichtung 100 vorgesehen.

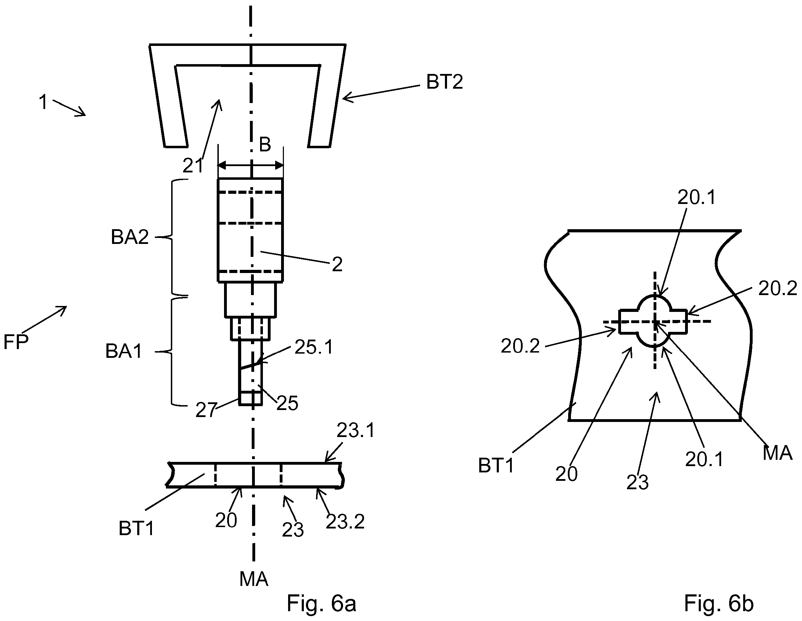

Der Tragkörper 111 weist dabei insbesondere in einem flachen Flächenabschnitt 23, der beispielsweise durch einen der Schenkel des als U-Profilträger ausgebildeten Tragkörper 111 gebildet sein kann, eine Vorlochung 20 mit einer von der Kreisform abweichenden Geometrie auf. Die Figur 6b zeigt dabei in schematischer Draufsicht einen teilweise dargestellten flachen Flächenabschnitt 23 eines Tragkörpers 111 mit einer Vorlochung 20. Insbesondere kann die Vorlochung 20 spiegelsymmetrisch ausgebildet sein und zwei identische Kreisbogenabschnitte 20.1 sowie zwei identische Rechteckabschnitte 20.2 aufweisen.

Wie insbesondere aus der Figur 4 ersichtlich, kann der sich quer zur Transportrichtung A erstreckende Tragkörper 111 auch mehrere Vorlochungen 20 aufweisen, die im Wesentlichen jeweils unterhalb einer korrespondierenden Gleitleiste 113 vorgesehen ist.

Dabei ist das wenigstens eine Transportelement 103 zumindest entlang der Transportstrecke TS auf wenigstens einer Gleitleiste 113 gleitend aufliegend geführt, wobei die wenigstens eine Gleitleiste 113 in einer Ebene parallel oder im Wesentlichen parallel unterhalb der Transportebene TE vorgesehen ist. Vorteilhaft sind jedoch mehrere Gleitleisten 113 vorgesehen, und zwar besonders vorteilhaft entlang der gesamten Transportstrecke TS entlang derer das Transportelement 103 bewegt wird.

Es können dabei sowohl quer als auch längs zur Transportstrecke TS mehrere Gleitleisten 113 unterhalb des Transportelementes 103 vorgesehen sein. Beispielweise können, wie in der Figur 4 dargestellt, vier quer zur Transportstrecke TS angeordnete Gleitleisten 113 vorgesehen sein, die in ihrer jeweiligen Längserstreckung im Wesentlichen parallel zueinander, also in Transportrichtung A, angeordnet sind .

Auch können nicht nur quer, sondern auch längs der Transportstrecke TS mehrere Gleitleisten 113 vorgesehen sein, die einander unmittelbar benachbart über vorzugsweise die gesamte Länge der Transportstrecke TS vorgesehen sind. Weiterhin vorteilhaft sind die dann in Längsrichtung der Transportstrecke TS vorgesehenen Gleitleisten 113 gegenseitig fluchtend zueinander angeordnet, und zwar derart, dass eine aneinander liegende gerade Reihe von sich gegenseitig unmittelbar benachbart anschließenden Gleitleisten 113 ausbildet ist. Ebenfalls ist vorgesehen, dass die nebeneinander angeordneten Gleitleisten 113 zueinander fluchtend ausgebildet bzw. angeordnet sind.

Vorzugsweise weisen die Gleitleisten 113 auf ihrer dem Transportelement 103 zugewandten Oberseite eine einen geringen Reibkoeffizienten aufweisende Oberfläche auf, die insbesondere aus einem Kunststoff gebildet sein kann.

Dabei kann das zumindest eine Profilelement 112 in seinem in Figur 4 gezeigten Querschnitt im Wesentlichen C-förmig ausgebildet sein. Das wenigstens eine Profilelement 112 weist dabei drei Schenkelabschnitte, nämlich einen mittleren Schenkelabschnitt 22.1, sowie zwei seitliche Schenkelabschnitte 22.2, auf. Dem mittleren Schenkabschnitt 22.1 ist dabei die Gleitleiste 113 zugeordnet. Derartige Profilelemente 112 sind dem Fachmann auf dem Gebiet der Transportvorrichtungen 100 in der Getränkeindustrie als C-Profilelemente oder U-Profilelemente bekannt. Sie erstrecken sich wiederum in einer parallelen Ebene unterhalb der durch die Gleitleisten 113 aufgespannten Ebene und damit auch in einer Ebene unterhalb der Transportebene TE. Die seitlichen Schenkelabschnitte 22.2 sind in ihrer jeweiligen Längserstreckung des Querschnitts zu dem Querschnitt des mittleren Schenkelabschnitts 22.1 in einem Winkel orientiert, der vorzugsweise kleiner als 90° Grad ausgebildet ist, so dass die jeweiligen freien Enden 22.3 der beiden seitlichen Schenkelabschnitte 22.2 im Querschnitt spitzwinklig in einer gedachten Verlängerung der freien Enden 22.3 aufeinander zulaufen würden. Der mittlere sowie die seitlichen Schenkelabschnitte 22.1, 22.2 begrenzen in ihrem Querschnitt eine Ausnehmung 21, die nach unten, also in Richtung des Tragkörpers 111 offen und von dort aus zugänglich ausgebildet ist. Die Ausnehmung 21 bildet dabei also eine Nut aus, die in ihrem Querschnitt eine Art Kegelstumpf ausbildet, sich also auf der den Gleitleisten 113 abgewandten Seite mit den beiden seitlichen Schenkelabschnitten 22.2 verjüngt.

Dabei weist der mittlere Schenkelabschnitt 22.1 im Wesentlichen eine Breite quer zur Transportrichtung A auf, die der im Querschnitt der Figur 4 dargestellten Breite der wenigstens einen Gleitleiste 113 entspricht. Die in einer nicht dargestellten Draufsicht im Wesentlichen rechteckförmig an ihrer Oberseite ausgebildete Gleitleiste 113 kann eine Länge in Transportrichtung A aufweisen, die der Länge des Profilelements 112 entspricht. Auch kann das Profilelement 112, insbesondere deren mittlerer Schenkelabschnitt 22.1, in einer nicht dargestellten Draufsicht im Wesentlichen rechteckförmig ausgebildet sein.

Wie insbesondere aus der Figur 2 ersichtlich, die den in Figur 1 mit einem strichlinierten Kreis im vorderen Bereich 1.11 umgrenzten Ausschnitt der Transportvorrichtung 100 in einer vergrößerten sowie detaillierteren Darstellung zeigt, ist das wenigstens eine Transportelement 103 zumindest im Übergangsbereich von der vorderen Umlenkeinrichtung 141 auf die zumindest eine Gleitleiste 113 zumindest abschnittsweise über wenigstens einen Einlauffinger 3 geführt. Der wenigstens eine Einlauffinger 3 ist dabei dazu ausgebildet, einen möglichst materialschonenden Übergang des wenigstens einen Transportelementes 103 zwischen Hintrum und Rücktrum der Transportvorrichtung 100 auszubilden. Insbesondere bildet der wenigstens einen Einlauffinger 3 eine materialschonende Übergabe des wenigstens einen Transportelementes 103 von der vorderen Umlenkeinrichtung 141 auf die wenigstens eine Gleitleiste 113 aus. Dafür ist der wenigstens eine Einlauffinger 3 mit der wenigstens einen Gleitleiste 113 und/oder mit dem zumindest einen Profilelement 112 lösbar verbunden. Insbesondere ist der Einlauffinger 3 einteilig ausgebildet.

Erfindungsgemäß ist die lösbare Verbindung des wenigstens einen Einlauffingers 3 mit der zumindest einen Gleitleiste 113 als Rastverbindung RV ausgebildet und/oder die lösbare Verbindung des wenigstens einen Einlauffingers 3 mit dem zumindest einen Profilelement 112 als Steckverbindung SV ausgebildet und/oder der wenigstens eine Einlauffinger 3 und das zumindest eine Profilelement 112 über eine Schnellbefestigungseinrichtung 2 mit dem zumindest einen Grundträger 111 lösbar verbunden.

Der Einlauffinger 3 weist dabei einen Führungsabschnitt 4 auf, der an seiner Oberseite 4.3 eine Auflagenfläche zum gleitend aufliegenden Überführen des Transportelementes 103 von der vorderen Umlenkeinrichtung 141 auf die wenigstens eine Gleitleiste 113 ausbildet. Der Führungsabschnitt 4 kann an seiner dem vorderen Ende 1.11 zugewandten freien Stirnseite 4.1 abgerundet und/oder abgeschrägt ausgebildet sein, insbesondere einen nach unten, also im Vergleich zur Oberseite 4.3 um vorzugsweise 90° Grad nach unten in Richtung der Bodenebene BE, gerichteten Flächenabschnitt 4.2 aufweisen. Insbesondere ist der Übergangsbereich zwischen der Oberseite 4.3 und dem Flächenabschnitt 4.2 abgerundet und/oder abgeschrägt ausgebildet. Der Führungsabschnitt 4 ist dabei an seiner Oberseite 4.3 als im Wesentlichen ebener, d.h. planer, Flächenabschnitt ausgebildet und insbesondere aus einem Material mit geringem Reibungskoeffizienten, beispielsweise einem Kunststoff, hergestellt.

Ferner kann der Einlauffinger 3 einen sich an den Führungsabschnitt 4 unmittelbar benachbart anschließenden Auflageabschnitt 5 aufweisen, der zur Ausbildung der Verbindung zwischen dem Einlauffinger 3 und der Gleitleiste 113 ausgebildet ist. Dazu weist der Auflageabschnitt vorzugsweise zumindest ein Halteelement, beispielsweise zumindest ein Rastelement 5.1 auf, mit welchem eine Rastverbindung RV zwischen dem Einlauffinger 3 und der Gleitleiste 113 herstellbar ist. Der Auflageabschnitt 5 ist damit beispielsweise zur verrastbaren Auflage einer Gleitleiste 113 ausgebildet. Dabei kann das Rastelement 5.1 in eine in der Gleitleiste 113 vorgesehene Rastöffnung 113.1 eingreifen, die als Sackbohrung oder die Gleitleiste 113 vollständig durchdringende Öffnung ausgebildet sein kann. Insbesondere kann das Rastelement 5.1 kegelstumpfförmig ausgebildet sein, und eine Außenumfangsfläche aufweisen, die an die Innenumfangsfläche der Rastöffnung 113.1 derart angepasst ist, dass das Rastelement 5.1 in die Rastöffnung 113.1 einführbar ist und in der Rastposition verrastet.

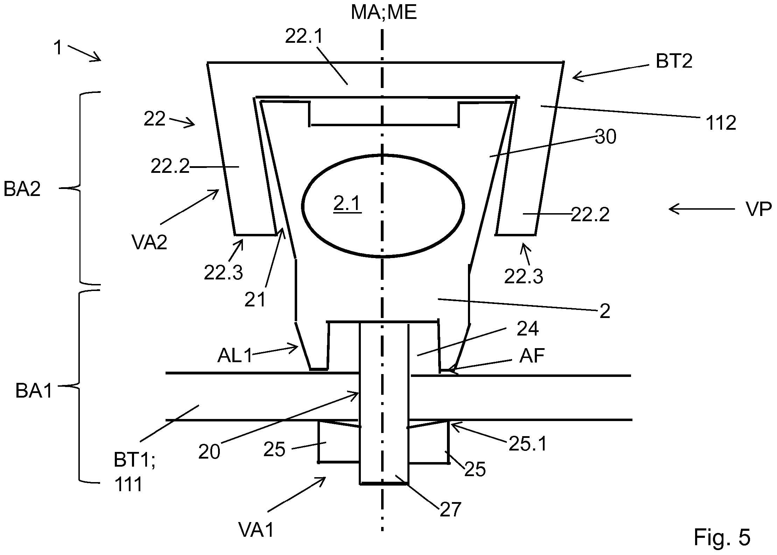

Überdies weist der Einlauffinger 3 einen sich wiederum an den Auflageabschnitt 5 benachbart anschließenden Aufnahmeabschnitt 6 zur lösbar steckenden Aufnahme eines Profilelementes 112 auf. Die lösbare Steckverbindung SV des Einlauffingers 3, insbesondere dessen Aufnahmeabschnittes 6, mit dem Profilelement 112 ist ausgebildet, indem die Außengeometrie des Aufnahmeabschnittes 6 an die Innengeometrie des Profilelementes 112 derart angepasst ist, dass der Aufnahmeabschnitt 6 formschlüssig von dem aufgesteckten Profilelement 112 aufgenommen wird. Die Steckverbindung SV zwischen Einlauffinger 3 und Profilelement 112 wird damit insbesondere über Formschluss der beiden Bauteile hergestellt. Insbesondere kann der aufgesteckte Profilelementabschnitt wie in den Figuren 4 und 5 dargestellt in seinem Querschnitt C-förmig ausgebildet sein.

Dabei können der Aufnahmeabschnitt 6, der Auflageabschnitt 5 sowie der Führungsabschnitt 4 jeweils derart treppenförmig gegenseitig versetzt vorgesehen sein, dass sich im jeweiligen Übergangsbereich eine Anschlagsfläche 7, 8 ausbildet. Mehr im Detail bildet sich zwischen dem Führungsabschnitt 4 und dem Auflageabschnitt 5 eine erste Anschlagsfläche 7 für eine auf dem Auflageabschnitt 5 angeordnete Gleitleiste 113 aus. Ferner bildet sich zwischen dem Aufnahmeabschnitt 6 und dem Auflageabschnitt 5 eine zweite Anschlagsfläche 8 für ein auf den Aufnahmeabschnitt 6 formschlüssig aufgeschobenes Profilelement 112 aus.

Überdies weist der Einlauffinger 3 einen sich wiederum an den Aufnahmeabschnitt 6 benachbart anschließenden Steckabschnitt 9 auf, über den der Einlauffinger 3 mit der Schnellbefestigungseinrichtung 2 lösbar verbindbar ist. Die lösbare Verbindung der Schnellbefestigungseinrichtung 2 mit dem Einlauffinger 3 ist dabei kraft- und/oder formschlüssig ausgebildet**.** Der Steckabschnitt 9 kann dabei formschlüssig in eine in der Schnellbefestigungseinrichtung 2 vorgesehene Aufnahme 2.1 in Form einer Ausnehmung kraft- und/oder formschlüssig aufgenommen werden. Die Ausnehmung 2.1 kann dabei als eine den Klemmkörper 30 der Schnellbefestigungseinrichtung 2 vollständig durchdringende Öffnung ausgebildet sein, die in der Innengeometrie an die Außengeometrie des Steckabschnittes 9 angepasst ist, derart, dass bei einem Einstecken des Steckabschnittes 9 in die Ausnehmung 2.1 ein Formschluss entsteht. Weiterhin kann der Steckabschnitt 9 auch zumindest eine Rastnase 9.1 aufweisen, die in dem eingesteckten Zustand des Steckabschnittes 9 in der Ausnehmung 2.1 verrastet, so dass neben der formschlüssigen Verbindung zusätzlich auch eine kraftschlüssige Verbindung zwischen dem Einlauffinger 3 und der Schnellbefestigungseinrichtung 2 erzeugbar ist. Besonders vorteilhaft weist der Steckabschnitt 9 eine Länge auf die zumindest der Breite B der Schnellbefestigungseinrichtung 9 im Bereich der Ausnehmung 2.1 entspricht.

Bevorzugt ist die Schnellbefestigungseinrichtung 2 zwischen einer Verriegelungsposition VP und einer Freigabeposition FP verstellbar ausgebildet, und zwar derart, dass die Schnellbefestigungseinrichtung 2 in der Verriegelungsposition VP das Profilelement 112 fest - jedoch lösbar - mit dem Grundträger 111 verbindet und in der Freigabeposition FP wieder freigibt, also löst.

Ferner vorteilhaft ist vorgesehen, dass die Schnellbefestigungseinrichtung 2 jeweils einen sich entlang einer Mittellängsachse MA der Schnellbefestigungseinrichtung 2 erstreckenden und einander gegenüberliegenden Befestigungsabschnitt BA1, BA2 aufweist, mit dem das Profilelement 112 und/oder der Grundträger 111 verbindbar sind. Insbesondere ist ein erster Befestigungsabschnitt BA1 vorgesehen, der mit dem Profilelement 112 verbindbar ist, sowie ein zweiter Befestigungsabschnitt BA2, der mit dem Grundträger 111 verbindbar ist.

Vorzugsweise ist der erste und/oder zweite Befestigungsabschnitt BA1, BA2 zur kraftschlüssigen und/oder formschlüssigen Verbindung in der Verriegelungsposition VP der Schnellbefestigungseinrichtung 2 ausgebildet.

Dabei kann auch vorgesehen sein, dass der erste und/oder zweite Befestigungsabschnitt BA1, BA2 in der Verriegelungsposition VP in das Profilelement 112 und/oder den Grundträger 111 eingesteckt ist. Insbesondere kann der erste und/oder zweite Befestigungsabschnitt BA1, BA2 in der Verriegelungsposition VP in die Vorlochung 20 des Grundträgers 111 und/oder die Ausnehmung 21 des Profilelementes 112 eingesteckt sein.

Mithin kann auch vorgesehen sein, dass der der erste und/oder zweite Befestigungsabschnitt BA1, BA2 in der Verriegelungsposition VP in das Profilelement 112 und/oder den Grundträger 111 eingeschnappt ist. Insbesondere kann der erste und/oder zweite Befestigungsabschnitt BA1, BA2 hierfür ein Verriegelungselement aufweisen, das in der Verriegelungsposition VP in die Vorlochung 20 des Grundträgers 111 und/oder die Ausnehmung 21 des Profilelementes 112 eingeschnappt ist.

Ferner kann auch vorgesehen sein, dass der der erste und/oder zweite Befestigungsabschnitt BA1, BA2 in der Verriegelungsposition VP mit dem Profilelement 112 und/oder den Grundträger 111 fest verbunden ist, indem der erste und/oder zweite Befestigungsabschnitt BA1, BA2 mit einem Verriegelungselement 25 die Vorlochung 20 des Grundträgers 111 und/oder die Ausnehmung 21 des Profilelementes 112 hintergreift.

Bevorzugt ist die Schnellbefestigungseinrichtung 2 um eine Mittellängsachse MA zwischen einer Verriegelungsposition VP und einer Freigabeposition FP drehbar ausgebildet, und zwar derart, dass die Schnellbefestigungseinrichtung 2 in der Verriegelungsposition VP das Profilelement 112 fest - jedoch lösbar - mit dem Grundträger 111 verbindet und in der Freigabeposition FP wieder freigibt, also löst. Hierbei ist Schnellbefestigungseinrichtung 2 besonders bevorzugt als Drehverriegelungseinrichtung ausgebildet, die in der Verriegelungsposition VP eine kraftschlüssige und/oder formschlüssige Verbindung herstellt.

Mehr im Detail sind in dem Ausführungsbeispiel der Figur 4 mehrere, insbesondere vier Schnellbefestigungseinrichtung 2 gezeigt, die mit ihrem jeweils ersten Befestigungsabschnitt BA1 mit einem gemeinsamen Grundträger 111 und mit ihrem zweiten Befestigungsabschnitt BA2 mit jeweils einem Profilelement 112 lösbar verbunden sind. Auf der Oberseite der jeweiligen Profilelemente 112 kann eine Gleitleiste 113 vorgesehen sein, die jeweils mittels zumindest einer Rastverbindung RV an dem jeweiligen Profilelement 112 lösbar befestigt ist. Auf den Gleitleisten 113 wiederum liegt das oder die Transportelemente 103 auf, das über die Oberseite der Gleitleisten 113 gleitend geführt wird. Zudem sind jeweils seitlich des Grundträger 111 ein rechtes und linkes Gerüstblech 114, 115 vorgesehen. Vorzugsweise erstrecken sich die Profilelemente 112 und/oder die Gleitleisten 113 und/oder die Gerüstbleche 114, 115 über die gesamte Länge der Transportstrecke TS und können dabei einteilig oder vorzugsweise jeweils mehrteilig ausgebildet sein.

Die Figur 5 zeigt dabei eine schematische Seitenansicht einer beispielhaften Ausführungsvariante einer erfindungsgemäßen Schnellbefestigungseinrichtung 2 in einer Verriegelungsposition VP, in der das Profilelement 112 lösbar mit dem Grundträger 111 mittels der Befestigungseinrichtung 2 verbunden ist. In der in Figur 4 dargestellten Seitenansicht spannt die Schnellbefestigungseinrichtung 2 eine Mittelebene ME durch die Mittellängsachse MA auf, die zur Zeichenebene, also der dargestellten Seitenansicht, senkrecht orientiert ist.

Insbesondere steht dabei der erste Befestigungsabschnitt BA1 mit dem Grundträger 111 und der zweite Befestigungsabschnitt BA2 mit dem Profilelement 112 in lösbarem Wirkeingriff, so dass der Grundträger 111 über den ersten Befestigungsabschnitt BA1 und das Profilelement 112 über den zweiten Befestigungsabschnittes BA2 miteinander verbindbar sind.

Ferner weist der erste Befestigungsabschnitt BA1 einen freiendseitigen ersten Verriegelungsabschnitt VA1 und/oder der zweite Befestigungsabschnitt BA2 einen zweiten Verriegelungsabschnitt VA2 auf mittels der Grundträger 111 über die Schnellbefestigungseinrichtung 2 in der Verriegelungsposition VP fest gehalten und in jeweiligen Freigabeposition FP von der Schnellbefestigungseinrichtung 2 gelöst, also freigegeben, werden kann.

Gemäß der Ausführungsvariante der Figur 5 weist der Tragkörper 111 zur lösbar klemmenden Befestigung zumindest in einem zumindest abschnittsweise flachen Abschnitt 23 eine von der Kreisform abweichende Vorlochung oder Öffnung 20 auf, dessen Querschnitt an den Längsschnitt des ersten Verriegelungsabschnitts VA1 angepasst ist, und zwar derart, dass der erste Verriegelungsabschnitt VA1 durch die Vorlochung 20 hindurchführbar ist und die Schnellbefestigungseinrichtung 2 durch Verdrehung um die Mittellängsachse MA mit dem ersten Befestigungsabschnitt BA1 an dem Tragkörper 111 klemmend befestigbar ist.

Ferner kann der erste Befestigungsabschnitt BA1 neben dem freiendseitigen ersten Verriegelungsabschnitt VA1 einen sich entlang der Mittellängsachse MA in Richtung des zweiten Befestigungsabschnittes BA2 daran anschließenden ersten Anlageabschnitt AL1 aufweisen, der eine sich vorzugsweise senkrecht zur Mittellängsachse MA erstreckende Aufnahmenut 24 ausbildet. Insbesondere kann der erste Anlagenabschnitt AL1 unmittelbar benachbart an dem zweiten Befestigungsabschnitt BA2 vorgesehen, insbesondere an diesem angeordnet sein.

Die Aufnahmenut 24 ist dabei zumindest teilweise umlaufend um die Mittellängsachse MA, vorzugsweise vollumlaufend um die Mittellängsachse MA vorgesehen, und bildet an dem dem Tragkörper 111 zugewandten Flächenabschnitt eine Anlagefläche AF für das Profilelement 112 in der Verriegelungsposition VP aus. Insbesondere ist die Aufnahmenut 24 in ihrer Dimensionierung an die Vorlochung 20 angepasst, derart, dass die Aufnahmenut 24 die Vorlochung 20 in der Verrieglungsposition VP nicht durchgreift bzw. durch die Vorlochung 20 hindurchgeführt werden kann, sondern sich an dem flachen Abschnitt 23 auf der dem zweiten Befestigungsabschnitt BA2 zugewandten Seite zumindest teilumfänglich um die Vorlochung 20 herum an dem flachen Abschnitt 23 abstützt, insbesondere kontaktschlüssig zur Anlage gelangt.

Überdies weist der erste Befestigungsabschnitt BA1 im ersten Verriegelungsabschnitt VA1 zumindest ein Verriegelungselement 25 auf, das an einem die Mittellängsachse MA koaxial umschließenden Abschnitt 27 vorgesehen ist und sich von der Mittellängsachse MA ausgehend radial nach außen erstreckt und als Verrieglungsfinger ausgebildet sein kann. Vorteilhaft sind dabei mehrere, insbesondere zwei Verriegelungselemente 25 vorgesehen, die sich an vorzugsweise gegenüberliegenden Seiten des Abschnittes 27 vorgesehen sind und sich von der Mittellängsachse MA ausgehend jeweils radial nach außen erstrecken und vorzugsweise jeweils als Verriegelungsfinger ausgebildet sind. Die Längserstreckung des Abschnittes 27 kann dabei an die Dicke des zu verriegelenden Tragkörpers 111 anpasst sein.

Dabei weist das wenigstens eine Verriegelungselement 25 an seiner dem zweiten Befestigungsabschnitt BA2 zugewandten Oberseite eine schräg, insbesondere spitzwinklig zur Mittellängsachse MA, orientiere Anlagefläche 25.1 auf, wie insbesondere aus der Figur 6a entnehmbar ist.

In der Verriegelungsposition VP ist das wenigstens eine Verriegelungselement 24 durch die Vorlochung 20 hindurchgeführt und wird relativ zum Tragkörper 111 um vorzugsweise 40° Grad von der Freigabeposition FP in die Verriegelungsposition VP verdreht, derart, dass das wenigstens eine Verriegelungselement 25 die Vorlochung 20 hintergreift und sich an dem flachen Abschnitt 23 auf der dem zweiten Befestigungsabschnitt BA2 abgewandten Seite zumindest teilumfänglich um die Vorlochung 20 herum an dem flachen Abschnitt 23 abstützt, insbesondere kontaktschlüssig zur Anlage gelangt.

Mehr im Detail kommt die schräge Anlagefläche 25.1 des wenigstens einen Verriegelungselementes 25 durch die Drehung des ersten Verriegelungsabschnitts VA1 zur klemmenden sowie kontaktschlüssigen Anlage an dem flachen Abschnitt 23 des Grundträger 111 auf der dem zweiten Befestigungsabschnitt BA2 abgewandten Seite, derart, dass der Grundträger 111 in dem flachen Abschnitt 23 auf der dem zweiten Befestigungsabschnitt BA2 zugewandten Seite gegen die Anlagenfläche AF der Aufnahmenut 24 gedrückt wird und der flache Abschnitt 23 zwischen der Anlagefläche AF und der schrägen Anlagefläche 25.1 klemmend gehalten wird.

Wie insbesondere aus dem in Figur 6b in schematischer Draufsicht teilweise dargestellten flachen Flächenabschnitt 23 des Grundträger 111 ersichtlich, weist die darin vorgesehene Vorlochung 20 eine von der Kreisform abweichende Geometrie im Querschnitt der Draufsicht auf. Insbesondere kann die Vorlochung 20 spielsymmetrisch ausgebildet sein und zwei identische Kreisbogenabschnitte 20.1 sowie zwei identische Rechteckabschnitte 20.2 aufweisen, die derart an den Längsschnitt des ersten Verriegelungsabschnitts VA1 geometrisch angepasst sind, dass der erste Verriegelungsabschnitt VA1, insbesondere das zumindest einen Verriegelungselement 25, durch die Rechtseckabschnitte 20.2 hindurchführbar ist und durch die 90°Grad Drehung in der Verriegelungsposition VP mittels der Kreisbogenabschnitte 20.1 vor einem Herausziehen aus der Vorlochung 20 gesperrt sind. Dabei kann die Vorlochung 20 in den flachen Flächenabschnitt 23 beispielsweise durch Lasern, Stanzen oder Bohren erzeugt werden.

Der flache Flächenabschnitt 23 des Grundträgers 111 weist eine plan, also eben, ausgebildete und dem zweiten Befestigungsabschnitt BA2 zugewandte Oberseite 23.1 sowie eine plan ausgebildete und dem zweiten Befestigungsabschnitt BA2 abgewandte Unterseite 23.2 auf. Insbesondere spannen die Oberseite 23.1 und Unterseite 23.2 im flachen Flächenabschnitt 23 parallel oder im Wesentlichen parallel zueinander verlaufende Ebenen auf. In anderen Worten weist der flache Flächenabschnitt 23 also eine konstante oder näherungsweise konstante Flächenstärke, insbesondere Flächendicke, auf.

Dabei weist gemäß der Ausführungsvariante der Figur 5 das Profilelement 112 zumindest die eine Ausnehmung 21 ausbildenden Profilierungsabschnitt 22 auf, dessen Querschnitt an den Querschnitt des zweiten Verriegelungsabschnitt VA2 angepasst ist, und zwar derart, dass zur lösbar klemmenden Befestigung des zweiten Befestigungsabschnittes BA2 am Profilelement 112 durch Verdrehung des zweiten Verriegelungsabschnittes VA2 um die Mittelängsachse MA der zweite Verriegelungsabschnitt VA2 zumindest abschnittsweise formschlüssig und/oder kraftschlüssig in der Ausnehmung 21 aufnehmbar ist.

Die Schnellbefestigungseinrichtung 2 weist in ihrem zweiten Verriegelungsabschnitt VA2 einen Klemmkörper 30 auf, der in seiner Draufsicht, also senkrecht zur Mittelebene ME, im Wesentlichen oval ausgebildet ist, und sich in dabei in Richtung des ersten Befestigungsabschnittes BA1 verjüngt, d.h. einen im Vergleich dazu kleineren ovalen Durchmesser aufweist, so dass der Klemmkörper 30 an seinem freien, dem zweiten Bauteil BT2 zugewandten Endabschnitt 30.1, die größte Länge L im seitlichen Querschnitt seiner Verriegelungsposition VP aufweist. Insbesondere weist der im Wesentlichen in seiner Draufsicht oval ausgebildete Klemmkörper 30 an zumindest zwei sich vorzugsweise gegenüberliegenden Seiten im Bereich des freien Endabschnittes 30.1 jeweils gerade Anlagenflächen 30.2, 30.3 auf, mit denen sich der Klemmkörper 30 in seiner Verriegelungsposition VP klemmend gegen die entsprechenden Innenseiten der beiden seitlichen Schenkelabschnitte 22.2 einspreitzt und so einen Klemmsitz ausbildet. Dabei sind die beiden seitlichen Schenklabschnitte 22.2 derart elastisch verformbar ausgebildet, dass sie bei einem Eindrehen der Anlagenflächen 30.2, 30.3 des Klemmkörpers 30 von der Freigabeposition FP in die Verriegelungsposition VP nach außen, also von der Mittelebene ME weggerichtet, ausgelenkt werden - also elastisch nachgeben.

Zwischen der Freigabeposition FP und der Verriegelungsposition VP wird der zweite Verriegelungsabschnitt VA2 der Schnellbefestigungseinrichtung 2 um vorzugsweise 40° Grad relativ zu dem Profilierungsabschnitt 22 verdreht. Die Figur 5 zeigt dabei insbesondere die Verriegelungsposition VP, während die Figur 6a die Freigabeposition FP zeigt. Weiterhin vorteilhaft kann die Schnellbefestigungseinrichtung 2 einteilig, insbesondere einstückig, ausgebildet sein, so dass sich bei einer Verdrehung des zweiten Befestigungsabschnitts BA2 der Schnellbefestigungseinrichtung 2 auch der erste Befestigungsabschnitt BA1 mit verdreht, also beispielsweise von der Freigabeposition FP in die Verriegelungsposition VP gedreht wird. Erster und zweiter Befestigungsabschnitt BA1, BA2 sind also kraftschlüssig miteinander verbunden.

Dabei weist der Klemmkörper 30 im seitlichen Querschnitt der Freigabeposition FP eine Breite B auf, die derart an den Querschnitt des Profilierungsabschnittes 22 angepasst ist, dass der Klemmkörper 30 in seiner Freigabeposition FP in die durch den Profilierungsabschnitt 22 ausgebildete Ausnehmung 21 einführbar ist.

Überdies weist der Klemmkörper 30 im Bereich der sich gegenüberliegenden Anlageflächen 30.2, 30.3 eine derartige Länge L, also Abstand der Anlageflächen 30.2, 30.3 auf, dass sich der Klemmkörper 30 in seiner Verriegelungsposition VP klemmend gegen die entsprechenden Innenseiten der beiden seitlichen Schenkelabschnitte 22.2 des zweiten Bauteils BT2 einspreitzt und so einen Klemmsitz erzeugbar ist. Weiterhin ist der Klemmkörper 30 derart ausgebildet, dass dieser durch eine Verdrehung von der Freigabeposition FP in die Verriegelungsposition VP gegen die Unterseite des mittleren Schenkelabschnittes 22.1 gedrückt wird und an der Unterseite des mittleren Schenkelabschnittes 22.1 bei Erreichen der Verrieglungsposition VP zur Anlage gelangt, so dass eine definierte Lage der Befestigungseinrichtung 2 relativ zu dem Profilelement 112 herstellbar ist.

Insbesondere können die Länge L und Breite B des Klemmkörpers 30 an den Profilierungsabschnitt 22, insbesondere an die Dimensionierung des mittleren sowie der seitlichen Schenkelabschnitte 22.2 angepasst sein.

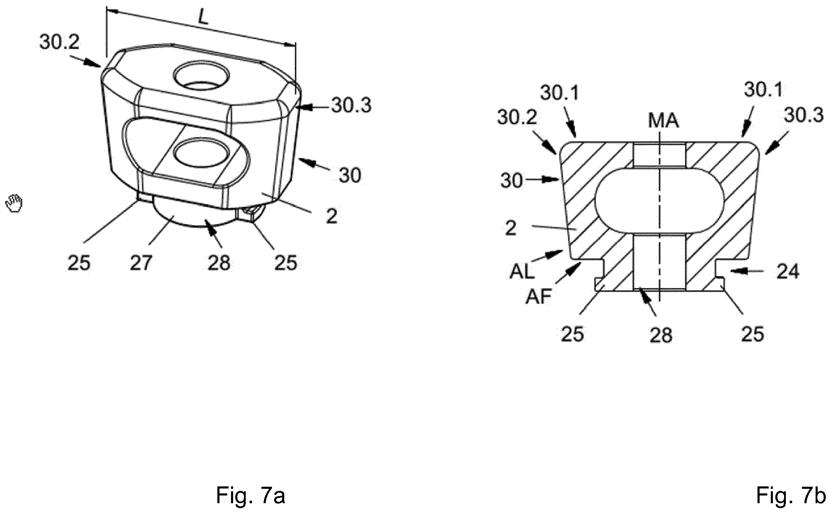

Wie insbesondere aus der Figur 7a oder 7b ersichtlich ist, weist die Schnellbefestigungseinrichtung 2 eine den ersten und zweiten Befestigungsabschnitt BA1, BA2 durchdringende Durchführung in Form einer Öffnung 28 auf, die im Bereich des Rohrabschnittes 27 zumindest abschnittsweise einen Innensechskant ausweisen kann, der eine Angriffsfläche für ein Werkzeug, beispielsweise einen Inbusschlüssel, ausgebildet, so dass die Drehbewegung zwischen der Freigabeposition FP und der Verriegelungsposition VP über das Werkzeug auf die Befestigungseinrichtung 2 einleitbar ist.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrundeliegende Erfindungsgedanke verlassen wird.

### Bezugszeichenliste

- 100: Transportvorrichtung
- 101: Stützelement
- 102: Transportgut
- 103: Transportelement
- 110: Gerüst
- 111: Tragkörper
- 112: Profilelement
- 113: Gleitleiste
- 113.1: Rastöffnung
- 114: Gerüstblech
- 115: Gerüstblech
- 116: Halteelement
- 117: Führungsgeländer
- 141: vordere Umlenkreinrichtung
- 142: rückwärtige Umlenkeinrichtung

- 1.11: vorderes Ende
- 1.12: rückwärtiges Ende
- 2: Befestigungseinrichtung
- 2.1: Ausnehmung
- 3: Einlauffinger
- 4: Führungsabschnitt
- 4.1: Stirnseite
- 4.2: Flächenabschnitt
- 4.3: Oberseite
- 5: Auflageabschnitt
- 5.1: Rastelement
- 6: Aufnahmeabschnitt
- 7: Anschlagsfläche
- 8: Anschlagsfläche
- 9: Steckabschnitt
- 9.1: Rastnase
- 20: Vorlochung
- 20.1: Kreisbogenabschnitt
- 20.2: Rechteckabschnitt
- 21: Ausnehmung
- 22: Profilierungsabschnitt
- 22.1: mittlerer Schenkelabschnitt
- 22.2: seitlicher Schenkelabschnitt
- 22.3: freies Ende
- 23: flacher Abschnitt
- 23.1: Oberseite
- 23.2: Unterseite
- 24: Aufnahmenut
- 25: Verriegelungselement
- 25.1: schräge Anlagefläche
- 27: Abschnitt
- 28: Öffnung

- 30: Klemmkörper
- 30.1: Endabschnitt
- 30.2, 30.3: gerade Anlagenfläche

- 40: Zwischenstück
- 40.1: Anschlussabschnitt
- 40.2: Anschlussabschnitt
- 50.1: Aufnahmeabschnitt
- 50.2: Aufnahmeabschnitt

- AL1: erster Anlagenabschnitt
- AL2: zweiter Anlagenabschnitt
- AF: Anlagefläche
- BA1: erster Befestigungsabschnitt
- BA2: zweiter Befestigungsabschnitt
- BT1: erstes Bauteil
- BT2: zweites Bauteil
- VA1: erster Verriegelungsabschnitt
- VA2: zweiter Verriegelungsabschnitt

- A: Transportrichtung
- BE: Bodenebene
- TS: Transportstrecke
- VP: Verriegelungsposition
- FP: Freigabeposition
- ME: Mittelebene
- MA: Mittellängsasche
- L: Länge
- B: Breite
- U: Umfangsfläche
- RV: Rastverbindung
- SV: Steckverbindung

## Patentansprüche

1. Transportvorrichtung zum Transportieren von Transportgut (102) in einer Transportrichtung (A), umfassend wenigstens einen Maschinenrahmen (110), an dem wenigstens ein, eine Schlaufe bildendes und umlaufend angetriebenes Transportelement (103) angeordnet ist, wobei das Transportelement (103) über eine bezogen auf die Transportrichtung (A) vordere Umlenkeinrichtung (141) sowie über eine bezogen auf die Transportrichtung (A) rückwärtige Umlenkeinrichtung (142) geführt ist, wobei zwischen der vorderen und der rückwärtigen Umlenkeinrichtung (141, 142) mittels des wenigstens einen Transportelementes (103) eine Transportstrecke (TS) für das Transportgut (102) ausbildet ist, wobei das wenigstens eine Transportelement (103) zumindest entlang der Transportstrecke (TS) auf wenigstens einer Gleitleiste (113) gleitend aufliegend geführt ist, wobei die wenigstens eine Gleitleiste (113) zumindest abschnittsweise entlang der Transportstrecke (TS) an zumindest einem Profilelement (112) angeordnet ist, das mit wenigstens einem Tragkörper (111) des Maschinenrahmens (110) verbunden ist, wobei das wenigstens eine Transportelement (103) zumindest im Übergangsbereich von der vorderen Umlenkeinrichtung (141) auf die zumindest eine Gleitleiste (113) zumindest abschnittsweise über wenigstens einen Einlauffinger (3) geführt ist, der mit der Gleitleiste (113) und/oder mit dem Profilelement (112) lösbar verbunden ist, wobei die lösbare Verbindung des wenigstens einen Einlauffingers (3) mit der zumindest einen Gleitleiste (113) als Rastverbindung (RV) ausgebildet ist und/oder die lösbare Verbindung des wenigstens einen Einlauffingers (3) mit dem zumindest einen Profilelement (112) als Steckverbindung (SV) ausgebildet ist und/oder der wenigstens eine Einlauffinger (3) und das zumindest eine Profilelement (112) über eine Schnellbefestigungseinrichtung (2) mit dem zumindest einen Tragkörper (111) lösbar verbunden sind, wobei der Einlauffinger (3) einen sich an einen Auflageabschnitt (5) benachbart anschließenden Aufnahmeabschnitt (6) aufweist, der die Steckverbindung (SV) zur lösbar steckenden Aufnahme eines Profilelementes (112) ausbildet, **dadurch gekennzeichnet, dass** der Einlauffinger (3) einen sich wiederum an den Aufnahmeabschnitt (6) benachbart anschließenden Steckabschnitt (9) aufweist, über den der Einlauffinger (3) mit der Schnellbefestigungseinrichtung (2) lösbar verbindbar ist, wobei die lösbare Verbindung der Schnellbefestigungseinrichtung (2) mit dem Einlauffinger (3) kraft- und/oder formschlüssig ausgebildet ist.

2. Transportvorrichtung nach Anspruch 1, **dadurch gekennzeichnet, dass** der Einlauffinger (3) zumindest einen Führungsabschnitt (4) aufweist, der an seiner Oberseite (4.3) eine Auflagenfläche zum gleitend aufliegenden Überführen des Transportelementes (103) von der vorderen Umlenkeinrichtung (141) auf die wenigstens eine Gleitleiste (113) ausbildet.

3. Transportvorrichtung nach Anspruch 2, **dadurch gekennzeichnet, dass** der Führungsabschnitt (4) an seinem dem vorderen Ende (1.11) zugewandten freien Stirnseite (4.1) abgerundet und/oder abgeschrägt ausgebildet ist.

4. Transportvorrichtung nach einem der vorhergehenden Ansprüche 2 oder 3, **dadurch gekennzeichnet, dass** der Einlauffinger (3) einen sich an den Führungsabschnitt (4) unmittelbar benachbart anschließenden Auflageabschnitt (5) aufweist, wobei der Auflageabschnitt (5) zur Ausbildung der Rastverbindung (RV) zwischen dem Einlauffinger (3) und der Gleitleiste (113) zumindest ein Rastelement (5.1) aufweist, derart, dass der Auflageabschnitt (5) ist damit zur verrastbaren Auflage einer Gleitleiste (113) ausgebildet ist.

5. Transportvorrichtung nach Anspruch 4, **dadurch gekennzeichnet, dass** das Rastelement (5.1) in eine in der Gleitleiste (113) vorgesehene Rastöffnung (113.1) derart eingreifbar ausgebildet ist, dass das Rastelement (5.1) in die Rastöffnung (113.1) einführbar ist und in einer Rastposition verrastet.

6. Transportvorrichtung nach einem der vorhergehenden Ansprüche, **dadurch gekennzeichnet, dass** die Steckverbindung (SV) ausgebildet ist, indem die Außengeometrie des Aufnahmeabschnittes (6) an die Innengeometrie des Profilelementes (112) derart angepasst ist, dass der Aufnahmeabschnitt (6) formschlüssig von dem aufgesteckten Profilelement (112) aufnehmbar ist.

7. Transportvorrichtung nach einem der vorangehenden Ansprüche 2 bis 5, **dadurch gekennzeichnet, dass** der Aufnahmeabschnitt (6), der Auflageabschnitt (5) sowie der Führungsabschnitt (4) jeweils derart treppenförmig gegenseitig versetzt vorgesehen sind, dass im jeweiligen Übergangsbereich eine Anschlagsfläche (7, 8) ausbildet ist.

8. Transportvorrichtung nach einem der vorhergehenden Ansprüche, **dadurch gekennzeichnet, dass** die wenigstens eine Schnellbefestigungseinrichtung (2) zur lösbaren Verbindung des Profilelementes (112) mit dem Grundträger (111) zwischen einer Verriegelungsposition (VP) und einer Freigabeposition (FP) verstellbar ausgebildet ist, und zwar derart, dass die Schnellbefestigungseinrichtung (2) in der Verriegelungsposition (VP) das Profilelement (112) fest jedoch lösbar mit dem Grundträger (111) verbindet und in der Freigabeposition (FP) wieder freigibt.

9. Transportvorrichtung nach Anspruch 8, **dadurch gekennzeichnet, dass** die Schnellbefestigungseinrichtung (2) jeweils einen sich entlang einer Mittellängsachse (MA) der Schnellbefestigungseinrichtung (2) erstreckenden und einander gegenüberliegenden Befestigungsabschnitt (BA1, BA2) aufweist, mit dem das Profilelement (112) und/oder der Grundträger (111) verbindbar sind.

10. Transportvorrichtung nach Anspruch 8 oder 9, **dadurch gekennzeichnet, dass** der erste und/oder zweite Befestigungsabschnitt BA1, BA2 zur kraftschlüssigen und/oder formschlüssigen Verbindung in der Verriegelungsposition (VP) der Schnellbefestigungseinrichtung (2) ausgebildet ist.

11. Transportvorrichtung nach einem der Ansprüche 8 bis 10, **dadurch gekennzeichnet, dass** der erste und/oder zweite Befestigungsabschnitt (BA1, BA2) in der Verriegelungsposition (VP) in das Profilelement (112) und/oder den Grundträger (111) eingesteckt ist und zwar insbesondere in eine Vorlochung (20) des Grundträgers (111) und/oder eine Ausnehmung (21) des Profilelementes (112).

12. Transportvorrichtung nach einem der Ansprüche 8 bis 11, **dadurch gekennzeichnet, dass** der der erste und/oder zweite Befestigungsabschnitt (BA1, BA2) in der Verriegelungsposition (VP) in das Profilelement (112) und/oder den Grundträger (111) eingeschnappt ist.

13. Transportvorrichtung nach einem der Ansprüche 8 bis 12, **dadurch gekennzeichnet, dass** der der erste und/oder zweite Befestigungsabschnitt (BA1, BA2) in der Verriegelungsposition (VP) mit dem Profilelement (112) und/oder den Grundträger (111) fest verbunden ist, indem der erste und/oder zweite Befestigungsabschnitt (BA1, BA2) mit einem Verriegelungselement (25) die Vorlochung (20) des Grundträgers (111) und/oder die Ausnehmung (21) des Profilelementes (112) hintergreift.

14. Transportvorrichtung nach einem der Ansprüche 8 bis 13, **dadurch gekennzeichnet, dass** die Schnellbefestigungseinrichtung (2) um eine Mittellängsachse (MA) zwischen einer Verriegelungsposition (VP) und einer Freigabeposition (FP) drehbar ausgebildet ist.

15. Transportvorrichtung nach einem der Ansprüche 8 bis 14, **dadurch gekennzeichnet, dass** die Schnellbefestigungseinrichtung (2) als Drehverriegelungseinrichtung ausgebildet ist, die in der Verriegelungsposition (VP) eine kraftschlüssige und/oder formschlüssige Verbindung herstellt.

16. Transportvorrichtung nach einem der Ansprüche 8 bis 15, **dadurch gekennzeichnet, dass** die Schnellbefestigungseinrichtung (2) in dem ersten Befestigungsabschnitt (BA1) einen freiendseitigen ersten Verriegelungsabschnitt (VA1) und in dem zweiten Befestigungsabschnitt (BA2) einen freiendseitigen zweiten Verriegelungsabschnitt (VA2) aufweist, dass der Grundträger (111) zur lösbar klemmenden Befestigung zumindest in einem zumindest abschnittsweise flachen Abschnitt (23) eine von der Kreisform abweichende Vorlochung oder Öffnung (20) aufweist, dessen Querschnitt an den Längsschnitt des ersten Verriegelungsabschnitts (VA1) angepasst ist, und zwar derart, dass der erste Verriegelungsabschnitt (VA1) durch die Vorlochung (20) hindurchführbar ist und die Schnellbefestigungseinrichtung (2) durch Verdrehung um die Mittellängsachse (MA) mit dem zweiten Befestigungsabschnitt (BA2) an dem Profilelement (112) klemmend befestigbar ist, und dass das Profilelement (112) zumindest einen eine Ausnehmung (21) ausbildenden Profilierungsabschnitt (22) aufweist, dessen Querschnitt an den Querschnitt des zweiten Verriegelungsabschnitt (VA2) angepasst ist, und zwar derart, dass zur lösbar klemmenden Befestigung des zweiten Befestigungsabschnittes (BA2) an dem Profilelement (112) durch Verdrehung des zweiten Verriegelungsabschnittes (VA2) um die Mittelängsachse (MA) der zweite Verriegelungsabschnitt (VA2) zumindest abschnittsweise formschlüssig in der Ausnehmung (21) aufnehmbar ist.

## Claims

1. Transport device for the transporting of transport goods items (102) in a transport direction (A), comprising at least one machine frame (110), arranged on which is at least one transport element (103), forming a loop and driven such as to circulate, wherein, related to the direction of travel (A), the transport element (103) is guided over a front deflection device (141), as well as over a rear deflection device (142), related to the direction of travel (A), wherein, between the front and rear deflection devices (141, 142), a transport segment (TS) for the transport goods items (102) is formed by means of the at least one transport element (103), wherein the at least one transport element (103) is guided along the transport segment (TS) sliding on at least one slide strip (113), wherein the at least one slide strip (113) is arranged at least in sections along the transport segment (TS) on at least one profile element (112), which is connected to at least one carrier body (111) of the machine frame (110), wherein the at least one transport element (103) is guided, at least in the transition region from the front deflection device (141), onto the at least one slide strip (113), at least in sections by at least one inlet finger (3), which is detachably connected to the slide strip (113) and/or to the profile element (112), wherein the detachable connection of the at least one inlet finger (3) to the at least one slide strip (113) is configured as a latch connection (RV), and/or the detachable connection of the at least one inlet finger (3) to the at least one profile element (112) is configured as a plug connection (SV), and/or the at least one inlet finger (3) and the at least one profile element (112) are detachably connected by means of a quick-action securing device (2) to the at least one carrier body (111), wherein the inlet finger (3) comprises a receiving section (6), connected adjacent to a contact section (5), which forms the plug connection (SV) for the detachable plug reception of a profile element (112), **characterised in that** the inlet finger (3) comprises a plug section (9), in turn connecting adjacent to the receiving section (6), by means of which the inlet finger (3) can be detachably connected to the quick-action securing device (2), wherein the detachable connection of the quick-action securing device (2) to the inlet finger (3) is configured as a non-positive and/or positive fit connection.

2. Transport device according to claim 1, **characterised in that** the inlet finger (3) comprises at least one guide section (4), which on its upper side (4.3) forms a contact surface for the sliding transfer of the transport element (103) from the front deflection device (141) onto the at least one slide strip (113).

3. Transport device according to claim 2, **characterised in that** the guide section (4) is configured on its face side (4.1), facing towards the front end (1.11), as rounded and/or oblique.

4. Transport device according to any one of the preceding claims 2 or 3, **characterised in that** the inlet finger (3) comprises a contact section (5) connecting immediately adjacent to the guide section (4), wherein the contact section (5) comprises, in order to form the latch connection (RV) between the inlet finger (3) and the slide strip (113), at least one latch element (5.1), in such a way that the contact section (5) is therefore configured for the latching contact of a slide strip (113).

5. Transport device according to claim 4, **characterised in that** the latch element (5.1) is configured such as to capable of engaging into a latch opening (113.1) provided in the slide strip (113), in such a way that the latch element (5.1) can be guided into the latch opening (113.1) and locks in a latched position.

6. Transport device according to any one of the preceding claims, **characterised in that** the plug connection (SV) is configured such that the outer geometry of the receiving section (6) is adjusted to the inner geometry of the profile element (112) in such a way that the receiving section (6) can be received in positive fit by the profile element (112) which is plug connected.

7. Transport device according to any one of the preceding claims 2 to 5, **characterised in that** the receiving section (6), the contact section (5), and the guide section (4) are provided offset to one another in a stepped manner in such a way that a stop surface (7, 8) is formed in the respective transition region.

8. Transport device according to any one of the preceding claims, **characterised in that** the at least one quick-action securing device (2) is configured such as to be adjustable, for the detachable connection of the profile element (112) to the base carrier (111), between a locking position (VP) and a release position (FP), and specifically in such a way that the quick-action securing device (2), in the locking position (VP) connects the profile element (112) securely but detachably to the base carrier (111), and in the release position (FP) releases it again.

9. Transport device according to claim 8, **characterised in that** the quick-action securing device (2) comprises in each case a securing section (BA1, BA2), extending along a mid-length axis (MA) of the quick-action securing device (2) and mutually opposed to one another, with which the profile element (112) and/or the base carrier (111) can be connected.

10. Transport device according to claim 8 or 9, **characterised in that** the first and/or second securing devices BA1, BA2 are configured to form a non-positive and/or positive connection in the locking position (VP) of the quick-action securing device (2).

11. Transport device according to any one of claims 8 to 10, **characterised in that** the first and/or second securing sections (BA1, BA2), in the locking position (VP), are plugged into the profile element (112) and/or the base carrier (111), and in particular into a front hole (20) of the base carrier (111) and/or into a cut-out opening (21) of the profile element (112).

12. Transport device according to any one of claims 8 to 11, **characterised in that** the first and/or second securing sections (BA1, BA2) in the locking position (VP) are snapped into the profile element (112) and/or the base carrier (111).

13. Transport device according to any one of claims 8 to 12, **characterised in that** the first and/or second securing sections (BA1, BA2), in the locking position (VP), are securely connected to the profile element (112) and/or the base carrier (111), inasmuch as the first and/or second securing sections (BA1, BA2) engage with a locking element (25) behind the front hole (20) of the base carrier (111) and/or the cut-out opening (21) of the profile element (112).

14. Transport device according to any one of claims 8 to 13, **characterised in that** the quick-action securing device (2) is configured such as to be capable of rotating about a mid-length axis (MA) between a locking position (VP) and a release position (FP).

15. Transport device according to any one of claims 8 to 14, **characterised in that** the quick-action securing device (2) is configured as a rotating locking device, which in the locking position (VP) establishes a non-positive and/or positive fit connection.

16. Transport device according to any one of claims 8 to 15, **characterised in that** the quick-action securing device (2) comprises in the first securing section (BA1), on the front side, a first locking section (VA1), and in the second securing section (BA2) a second locking section (VA2) on the free-end side, and that the base carrier (111) comprises, for the detachable clamping securing at least in sections in at least one flat section (23), a front aperture or opening (20), deviating from the circular shape, of which the cross-section is adjusted to the longitudinal cross-section of the first locking section (VA1), and specifically in such a way that the first locking section (VA1) can be guided through the front aperture (20), and the quick-action securing device (2) can be secured with clamping effect, by rotation about the mid-length axis (MA), with the second securing section (BA2), to the profile element (112), and that the profile element (112) comprises at least one profiling section (22), forming a cut-out opening (21), of which the cross-section is adjusted to the cross-section of the second locking section (VA2), and specifically in such a way that, for the detachable clamping securing of the second securing section (BA2) to the profile element (112) by the rotation of the second locking section (VA2) about the mid-length axis (MA), the second locking section (VA2) can be received in the cut-out opening (21) at least in sections in positive fit.

## Revendications

1. Dispositif de transport pour le transport de marchandises à transporter (102) dans un sens de transport (A), comprenant au moins un bâti de machine (110), au niveau duquel est disposé au moins un élément de transport (103) formant une boucle et entraîné sur la circonférence, dans lequel l'élément de transport (103) est guidé par le biais d'un dispositif de renvoi avant (141) par rapport au sens de transport (A) ainsi que par le biais d'un dispositif de renvoi arrière (142) par rapport au sens de transport (A), dans lequel un tronçon de transport (TS) pour les marchandises à transporter (102) est formé entre le dispositif de renvoi avant et le dispositif de renvoi arrière (141, 142) au moyen de l'au moins un élément de transport (103), dans lequel l'au moins un élément de transport (103) est guidé reposant par glissement au moins le long du tronçon de transport (TS) sur au moins une barre de glissement (113), dans lequel l'au moins une barre de glissement (113) est agencée au moins par sections le long du tronçon de transport (TS) au niveau d'au moins un élément profilé (112) qui est relié à au moins un corps porteur (111) du bâti de machine (110), dans lequel l'au moins un élément de transport (103) est guidé au moins dans la zone de transition du dispositif de renvoi avant (141) vers l'au moins une barre de glissement (113) au moins par sections par le biais d'au moins un doigt d'entrée (3) qui est relié de manière détachable à la barre de glissement (113) et/ou à l'élément profilé (112), dans lequel la liaison détachable de l'au moins un doigt d'entrée (3) avec l'au moins une barre de glissement (113) est formée en tant que liaison d'encliquetage (RV) et/ou la liaison détachable de l'au moins un doigt d'entrée (3) avec l'au moins un élément profilé (112) est formée en tant que liaison d'enfichage (SV) et/ou l'au moins un doigt d'entrée (3) et l'au moins un élément profilé (112) sont reliés de manière détachable par le biais d'un dispositif de fixation rapide (2) à l'au moins un corps porteur (111), dans lequel le doigt d'entrée (3) présente une section de réception (6) raccordée de manière adjacente à une section d'appui (5), laquelle section de réception forme la liaison d'enfichage (SV) pour la réception par enfichage détachable d'un élément profilé (112), **caractérisé en ce que** le doigt d'entrée (3) présente une section enfichable (9) raccordée de nouveau de manière adjacente à la section de réception (6), par le biais de laquelle le doigt d'entrée (3) peut être relié de manière détachable au dispositif de fixation rapide (2), dans lequel la liaison détachable du dispositif de fixation rapide (2) avec le doigt d'entrée (3) est formée par liaison à force et/ou à complémentarité de formes.

2. Dispositif de transport selon la revendication 1, **caractérisé en ce que** le doigt d'entrée (3) présente au moins une section de guidage (4) qui forme au niveau de sa face supérieure (4.3) une surface d'appui pour le transfert reposant par glissement de l'élément de transport (103) du dispositif de renvoi avant (141) à l'au moins une barre de glissement (113).

3. Dispositif de transport selon la revendication 2, **caractérisé en ce que** la section de guidage (4) est formée de manière arrondie et/ou biseautée au niveau de sa face avant libre (4.1) orientée vers l'extrémité avant (1.11).

4. Dispositif de transport selon l'une quelconque des revendications précédentes 2 ou 3, **caractérisé en ce que** le doigt d'entrée (3) présente une section d'appui (5) raccordée de manière directement adjacente à la section de guidage (4), dans lequel la section d'appui (5) présente au moins un élément d'encliquetage (5.1) pour la formation de la liaison d'encliquetage (RV) entre le doigt d'entrée (3) et la barre de glissement (113) de sorte que la section d'appui (5) soit ainsi formée pour l'appui encliquetable d'une barre de glissement (113).

5. Dispositif de transport selon la revendication 4, **caractérisé en ce que** l'élément d'encliquetage (5.1) est formé de manière à pouvoir s'engager dans une ouverture d'encliquetage (113.1) prévue dans la barre de glissement (113) de telle manière que l'élément d'encliquetage (5.1) puisse être introduit dans l'ouverture d'encliquetage (113.1) et soit rouillé dans une position d'encliquetage.

6. Dispositif de transport selon l'une quelconque des revendications précédentes, **caractérisé en ce que** la liaison d'enfichage (SV) est formée **en ce que** la géométrie extérieure de la section de réception (6) est adaptée à la géométrie intérieure de l'élément profilé (112) de telle manière que la section de réception (6) puisse être réceptionnée par complémentarité de formes par l'élément profilé enfiché (112).

7. Dispositif de transport selon l'une quelconque des revendications précédentes 2 à 5, **caractérisé en ce que** la section de réception (6), la section d'appui (5) ainsi que la section de guidage (4) sont respectivement prévues décalées les unes par rapport aux autres en escalier de sorte qu'une surface de butée (7, 8) soit formée dans la zone de transition respective.

8. Dispositif de transport selon l'une quelconque des revendications précédentes, **caractérisé en ce que** l'au moins un dispositif de fixation rapide (2) pour la liaison détachable de l'élément profilé (112) avec le support de base (111) est formé de manière déplaçable entre une position de verrouillage (VP) et une position de libération (FP), et ce, de telle sorte que le dispositif de fixation rapide (2) dans la position de verrouillage (VP) relie l'élément profilé (112) fixement toutefois de manière détachable au support de base (111) et le libère à nouveau en position de libération (FP).

9. Dispositif de transport selon la revendication 8, **caractérisé en ce que** le dispositif de fixation rapide (2) présente respectivement une section de fixation (BA1, BA2) s'étendant le long d'un axe médian longitudinal (MA) du dispositif de fixation rapide (2) et opposée l'une à l'autre, à laquelle l'élément profilé (112) et/ou le support de base (111) peuvent être reliés.

10. Dispositif de transport selon la revendication 8 ou 9, **caractérisé en ce que** la première et/ou la seconde section de fixation BA1, BA2 est formée pour la liaison à force et/ou à complémentarité de formes dans la position de verrouillage (VP) du dispositif de fixation rapide (2).

11. Dispositif de transport selon l'une quelconque des revendications 8 à 10, **caractérisé en ce que** la première et/ou la seconde section de fixation (BA1, BA2) est enfichée dans la position de verrouillage (VP) dans l'élément profilé (112) et/ou le support de base (111) et ce notamment dans un préperçage (20) du support de base (111) et/ou un évidement (21) de l'élément profilé (112).

12. Dispositif de transport selon l'une quelconque des revendications 8 à 11, **caractérisé en ce que** la première et/ou la seconde section de fixation (BA1, BA2) est encliquetée dans la position de verrouillage (VP) dans l'élément profilé (112) et/ou le support de base (111).

13. Dispositif de transport selon l'une quelconque des revendications 8 à 12, **caractérisé en ce que** la première et/ou la seconde section de fixation (BA1, BA2) est reliée de manière fixe à l'élément profilé (112) et/ou au support de base (111) dans la position de verrouillage (VP) **en ce que** la première et/ou la seconde section de fixation (BA1, BA2) vient en prise avec un élément de verrouillage (25) derrière le préperçage (20) du support de base (111) et/ou l'évidement (21) de l'élément profilé (112).

14. Dispositif de transport selon l'une quelconque des revendications 8 à 13, **caractérisé en ce que** le dispositif de fixation rapide (2) est formé de manière rotative autour d'un axe médian longitudinal (MA) entre une position de verrouillage (VP) et une position de libération (FP).

15. Dispositif de transport selon l'une quelconque des revendications 8 à 14, **caractérisé en ce que** le dispositif de fixation rapide (2) est formé comme un dispositif de verrouillage rotatif qui établit dans la position de verrouillage (VP) une liaison à force et/ou à complémentarité de formes.

16. Dispositif de transport selon l'une quelconque des revendications 8 à 15, **caractérisé en ce que** le dispositif de fixation rapide (2) présente dans la première section de fixation (BA1) une première section de verrouillage côté extrémité libre (VA1) et dans la seconde section de fixation (BA2) une seconde section de verrouillage côté extrémité libre (VA2), **en ce que** le support de base (111) permettant une fixation par serrage détachable au moins dans une section (23) au moins par sections plate présente un préperçage ou une ouverture (20) différent(e) de la forme circulaire, dont la section transversale est adaptée à la coupe longitudinale de la première section de verrouillage (VA1), et ce, de telle sorte que la première section de verrouillage (VA1) puisse passer à travers le préperçage (20) et le dispositif de fixation rapide (2) puisse être fixé par serrage à l'élément profilé (112) par rotation autour de l'axe médian longitudinal (MA) avec la seconde section de fixation (BA2), et **en ce que** l'élément profilé (112) présente au moins une section de profilage (22) formant un évidement (21), dont la section transversale est adaptée à la section transversale de la seconde section de verrouillage (VA2), et ce de telle sorte que pour la fixation par serrage détachable de la seconde section de fixation (BA2) à l'élément profilé (112) par rotation de la seconde section de verrouillage (VA2) autour de l'axe médian longitudinal (MA), la seconde section de verrouillage (VA2) puisse être reçue par complémentarité de formes au moins par sections dans l'évidement (21).
